# FASCICULE DE BREVET EUROPEEN

(11) **EP 0 649 494 B1**
(45) Date de publication et mention de la délivrance du brevet: **24.09.1997**
(21) Numéro de dépôt: 93914827.6
(22) Date de dépôt: 07.07.1993
(51) Int. Cl.: F01N 1/16, F01N 9/00, F01N 1/24

(54) **LIGNE D'ADMISSION OU D'ECHAPPEMENT POUR MACHINE ALTERNATIVE**
EINLASS- ODER AUSPUFFLEITUNG FÜR HUBKOLBENMASCHINEN
INLET OR EXHAUST LINE FOR RECIPROCATING MACHINE

(30) Priorité: 07.07.1992 FR 9208362
(43) Date de publication de la demande: 26.04.1995
(73) Titulaire: CENTRE NATIONAL DE LA RECHERCHE SCIENTIFIQUE (CNRS), 75016 Paris (FR)
(72) Inventeur: PEUBE, Jean, Laurent, F-86530 Naintre (FR); TARTARIN, Jacky, F-86000 Poitiers (FR); LAUMONNIER, Janick, F-86000 Poitiers (FR)
(74) Mandataire: Leszczynski, André
(86) Numéro de dépôt international: FR9300703
(87) Numéro de publication internationale: WO9401659

(56) Documents cités:
- FR-A- 2 613 089
- GB-A- 1 559 996
- PATENT ABSTRACTS OF JAPAN vol. 9, no. 330 (M-442)(2053) 25 Décembre 1985 & JP-A-60 162 007 (SUZUKI) 23 Août 1985
- PATENT ABSTRACTS OF JAPAN vol. 13, no. 469 (M-883) 24 Octobre 1989 & JP-A-11 82 568 (NIPPON DENSO) 20 Juillet 1989

## Description

La présente invention est relative à une ligne d'admission ou d'échappement pour machine alternative.

Selon l'invention, on entend par machine alternative tout dispositif créant des pulsations de débit soit de manière provoquée, soit de manière spontanée, comme par exemple un moteur thermique, un compresseur, ou une pompe à chaleur.

On sait que les pulsations des gaz d'admission ou d'échappement d'une machine alternative sont une source importante de bruits, notamment de bruits à basses fréquences. Il en est de même des sorties de toutes les machines alternatives (compresseurs, pompes à vide, pompes de chaleur, etc) et des admissions de ces machines.

Ces pulsations sont très énergétiques à des fréquences précises liées au cycle de la machine, mais très faibles pour des fréquences intermédiaires différentes.

L'analyse acoustique de ce bruit révèle en effet un spectre à raies discrètes très énergétiques.

Pour diminuer le niveau de bruit généré par les pulsations d'un moteur thermique par exemple, on utilise des lignes d'échappement munies de silencieux.

Cependant, si ces silencieux permettent d'atténuer modérément les pulsations basses fréquences des gaz d'échappement, ils introduisent simultanément dans la ligne d'échappement des singularités qui se traduisent par des fluctuations et des turbulences de l'écoulement, donc par des bruits qui possèdent des moyennes et hautes fréquences.

De plus, lorsqu'une ligne d'échappement est installée sur un véhicule automobile, ses singularités géométriques sont d'autant plus importantes qu'elle doit s'adapter à l'espace disponible sous le véhicule. C'est ainsi qu'on constate fréquemment dans des lignes d'échappement que la section intérieure de la conduite varie plusieurs fois d'une extrémité à l'autre de la ligne d'échappement, laquelle comporte par ailleurs de nombreuses chicanes et autres obstacles propres à générer des bruits.

Il en résulte que les lignes d'échappement usuelles, qui sont constituées par des conduites tubulaires reliant des silencieux, sont relativement volumineuses et sont a l'origine de bruits de souffle supplémentaires ; en outre elles entraînent des pertes de charge assez notables.

On connait également des dispositifs de réduction du bruit d'une ligne d'échappement qui génèrent, en direction de la ligne d'échappement, une onde acoustique qui est le plus rigoureusement possible égale à celle émise par cette dernière.

Toutefois, de tels dispositifs sont très encombrants, nécessitent un appareillage électronique et acoustique très sensible, et sont par conséquent peu fiables dans les conditions d'utilisation particulièrement rigoureuses d'une ligne d'échappement automobile.

En outre, du point de vue énergétique, de tels dispositifs sont peu satisfaisants dans la mesure où ils ne cherchent aucunement à diminuer l'énergie consacrée à la génération du bruit, mais au contraire dépensent une énergie supplémentaire d'une valeur au moins égale.

Enfin, ces dispositifs mettent en oeuvre des techniques pour lesquelles la conception d'une ligne d'échappement adaptée à tel moteur et destinée à être installée sur tel équipement, nécessite des simulations complexes du comportement du fluide à l'intérieur de la ligne d'échappement, compte tenu des éléments dont elle sera constituée qui peuvent en outre interférer entre eux.

On a également déjà tenté d'amortir les pulsations de débit d'un fluide dans une conduite à l'aide de dispositifs à géométrie variable qui tendent à modifier les fréquences de résonance dans la conduite en adaptant l'action d'un moyen de restriction à une mesure globale du débit du fluide dans la conduite, et non aux pulsations propres du fluide.

La présente invention vise à fournir une nouvelle ligne d'admission ou d'échappement qui ne présente pas les inconvénients rencontrés dans la technique connue, et qui permet d'atténuer d'une façon substantielle notamment le niveau sonore d'un moteur thermique, tout en étant d'une réalisation simple et économique.

De plus, l'objet de la présente invention se révèle, de par sa structure, être d'une adaptabilité remarquable aux différentes machines alternatives et aux différentes formes géométriques qu'on peut lui imposer.

En outre, la ligne d'admission ou d'échappement selon l'invention permet d'analyser le signal issu d'un capteur de mesure en vue de détecter et éventuellement de diagnostiquer un dysfonctionnement de la machine alternative.

La présente invention a pour objet une ligne d'admission ou d'échappement notamment pour machine alternative, telle que définie par la revendication 1.

Le dispositif d'analyse selon l'invention compare les différentes périodes du signal acoustique mesuré avec des signaux de référence.

Par exemple, pour un moteur thermique à quatre cylindres, le signal acoustique perçu présente un cycle de quatre périodes. Une irrégularité sur l'une de ces périodes par rapport aux trois autres peut révéler un dysfonctionnement de l'un des quatre cylindres.

La présente invention allie les avantages d'un dispositif de restriction variable, qui réalise le contrôle actif des pulsations de débit d'un gaz, à ceux du garnissage des parois d'une tubulure.

Les inventeurs ont en effet remarqué que ces deux dispositifs, rassemblés dans une même ligne d'admission ou d'échappement, permettent d'obtenir des atténuations de bruits supérieures à celles obtenues en utilisant ces dispositifs séparément.

La complémentarité du dispositif de restriction variable et du garnissage de la paroi intérieure de la tubulure tient au fait que le dispositif de restriction variable, qui constitue un obstacle placé sur le passage de gaz est lui-même générateur de bruit.

Or, le niveau sonore de ce bruit parasite se limite à des fréquences moyennes ou élevées du fait que, par construction, le dispositif de restriction variable élimine automatiquement les pulsations à basses fréquences des gaz, y compris celles dont il pourrait être à l'origine.

Au contraire, le garnissage des parois est relativement peu efficace pour atténuer des bruits de basses fréquences, mais est particulièrement adapté à l'atténuation de bruits de hautes fréquences.

Par conséquent, le garnissage des parois est indiqué pour éliminer les bruits hautes fréquences des gaz, ainsi que les composantes hautes fréquences du bruit généré par le dispositif de contrôle actif. Un autre rôle du garnissage est d'éviter toute réflexion importante des ondes acoustiques à l'intérieur de la tubulure.

Dans le cas d'un moteur thermique, une ligne d'échappement selon l'invention peut se passer des silencieux de la technique antérieure.

Selon un mode de réalisation préféré de l'invention, le dispositif de restriction de la section de la tubulure agit en partie de la tubulure éloignée de la machine génératrice des pulsations.

Il est en effet préférable de contrôler activement les pulsations des gaz le plus loin possible de la machine alternative, c'est-à-dire en conservant un volume de fluide important en amont du dispositif de restriction, pour éviter de dégrader le rendement énergétique de ladite machine.

Dans un autre mode de réalisation, la portion de tubulure située en amont du dispositif de restriction possède un diamètre plus important que celui de la portion de tubulure qui renferme ce dernier. Ainsi, la tubulure présente un volume relativement important comme dans le mode de réalisation précédent, ce qui limite la contre pression générée lors de la restriction.

Cette disposition peut être intéressante dans le cas où une telle ligne doit être installée dans un emplacement de dimensions réduites, par exemple à la sortie d'un moteur de certains véhicules ou de moteurs industriels.

Une ligne d'admission ou d'échappement selon l'invention présente notamment l'avantage de n'occuper qu'un volume très réduit, en comparaison avec les lignes d'échappement de la technique antérieure.

Il en découle une réduction de masse, puisqu'en l'absence de silencieux le poids de la ligne d'admission ou d'échappement se résume sensiblement au poids de la tubulure.

Ces avantages sont importants pour l'industrie automobile, puisque le logement d'une ligne d'échappement selon l'invention et son accrochage sous un véhicule ne soulèvent plus les problèmes d'encombrement et de masse rencontrés jusqu'ici.

Etant garnie intérieurement, la ligne d'admission ou d'échappement selon l'invention présente en outre les deux avantages suivants :
- Les risques que la paroi de la tubulure entre en résonance avec les pulsations des gaz sont éliminés,
- Les bruits rayonnés sont également pratiquement nuls puisque, d'une part, la paroi externe de la ligne d'admission ou d'échappement n'est plus soumise aux vibrations des gaz, et d'autre part, la surface émissive de la ligne d'admission ou d'échappement, c'est-à-dire sa surface externe globale, est considérablement réduite par rapport à celle d'une ligne d'échappement classique qui est plus longue et comporte des silencieux dont le diamètre externe est important.

Selon un mode de réalisation particulier de l'invention, la ligne d'admission ou d'échappement comporte un moyen de réglage du dispositif de restriction qui provoque l'atténuation d'une gamme préférentielle de fréquences de pulsations des gaz permettant l'obtention d'une sonorité particulière de la ligne.

De cette manière, on peut accorder le "timbre" de la ligne d'admission ou d'échappement en fonction du bruit que l'on désire obtenir.

Par exemple, sur une automobile, le constructeur ou l'acheteur du véhicule peut désirer que la ligne d'échappement émette soit un bruit à connotation sportive, soit un bruit plus atténué.

Dans le même ordre d'idée, une installation industrielle peut émettre un bruit à coloration désagréable résultant de combinaisons fréquentielles qui, même à niveau sonore assez faible peuvent être inconfortables à l'oreille humaine.

Grâce à la ligne d'admission ou d'échappement selon l'invention, on peut choisir les fréquences à atténuer en réglant convenablement le dispositif de restriction.

Par ailleurs, selon un mode de réalisation particulier de l'invention, la ligne d'admission ou d'échappement équipe un véhicule automobile et son dispositif de restriction intégre la vitesse de déplacement du véhicule comme paramètre supplémentaire, pour atténuer au maximum les bruits d'échappement du moteur lorsque le véhicule se déplace à vitesse réduite et pour minimiser les pertes de charges des gaz d'échappement de manière à améliorer les performances du moteur thermique lorsque le véhicule se déplace à vitesse élevée.

On comprend que ce mode de réalisation est particulièrement avantageux pour adapter le niveau de bruit d'un véhicule utilisé à la fois en ville, donc à vitesse réduite et sur route ou sur autoroute, c'est-à-dire à vitesse élevée.

Dans le but de mieux faire comprendre l'invention, on va en décrire deux modes de réalisation donnés à titre d'exemple et sans aucun caractère limitatif en référence au dessin annexé dans lequel :

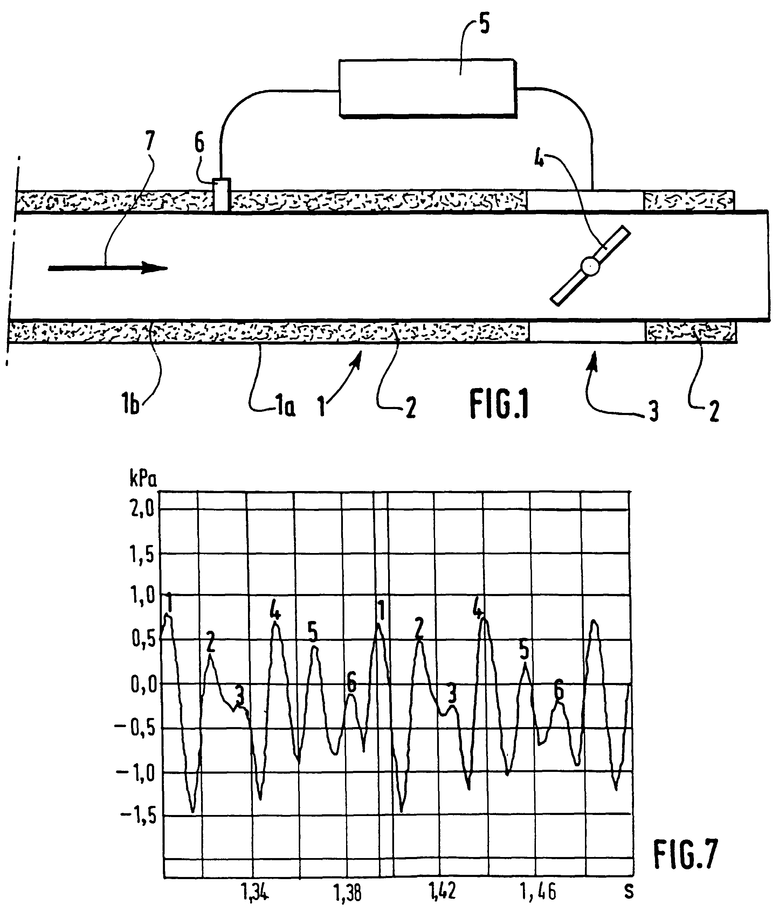

- la figure 1 représente une ligne d'échappement selon un premier mode de réalisation de l'invention,
- la figure 2 représente une ligne d'échappement de l'art antérieur,
- la figure 3 représente une ligne d'échappement selon un second mode de réalisation de l'invention,
- les figures 4 à 6 sont des graphes illustrant les différences d'efficacité de réduction de bruit entre les lignes d'échappement des figures 2 et 3, et
- la figure 7 représente un relevé de pression effectué dans une ligne d'échappement selon l'invention.

La paroi 1a de la tubulure 1 est réalisée en métal et présente une surface lisse continue.

A l'intérieur de la tubulure, un matériau 1b réticulé à larges mailles, tel qu'un grillage métallique maintient une garniture 2 plaquée contre la paroi la de la tubulure 1.

A titre d'exemple, on a réalisé une ligne d'échappement selon l'invention possédant un diamètre extérieur de 95mm, une longueur totale de 0,60 m, et qui est garnie intérieurement de laine de roche sur une épaisseur de 25mm, ce qui laisse une section intérieure de passage des gaz d'échappement de 45mm de diamètre.

La garniture 2 est présente de bout-en-bout de la tubulure, sauf au voisinage d'un dispositif de restriction 3 dont on perçoit l'obturateur 4 en position semi fermée.

Un organe de commande 5 contrôle le dispositif de restriction 3 en fonction du signal qu'il reçoit d'un capteur 6 logé dans l'épaisseur de la tubulure 1.

Le fonctionnement d'un tel dispositif de restriction est décrit dans le document FR-A-2 613 089.

Les gaz pulsés issus du moteur thermique s'écoulent dans la ligne d'échappement comme matérialisé par le flèche 7.

On constate que, de par sa forme générale, la ligne d'échappement selon l'invention est peu encombrante et qu'elle présente une surface rayonnante sensiblement réduite.

En outre, cette ligne d'échappement est par nature adaptable à tout type de moteur, l'adaptation du dispositif de restriction étant simplement basée sur la loi d'asservissement à laquelle il obéit.

Du point de vue industriel, ceci constitue un avantage puisque le fabricant de lignes d'échappement n'est pas tenu de concevoir et de fabriquer une ligne d'échappement pour chaque moteur existant.

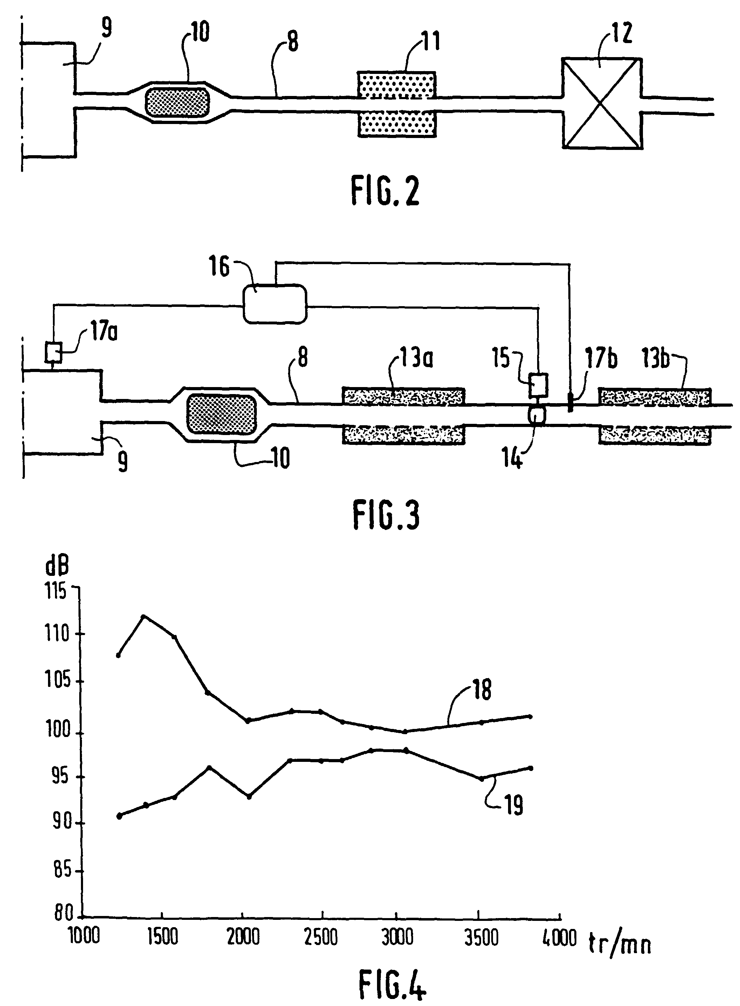

Sur la figure 2, on a schématiquement représenté une ligne d'échappement de l'art antérieur. Une telle ligne d'échappement comporte une tubulure 8 de 45 mm de diamètre montée sur la sortie des gaz d'échappement d'un moteur 9.

Un pot catalytique 10, un pot de détente 11 et un silencieux 12 sont successivement disposés sur la tubulure 8 dans le sens de passage des gaz d'échappement.

Une ligne d'échappement selon un second mode de réalisation de l'invention a été représentée sur la figure 3. Cette ligne d'échappement est de même longueur que celle qui vient d'être décrite.

Cependant, l'encombrement de la ligne d'échappement de la figure 3 est moindre que celui de la ligne d'échappement de la figure 2, du fait que les diamètres extérieurs des éléments dont elle est constituée sont plus petits.

En dehors du pot catalytique 10, qui remplit la même fonction que précédemment, le pot de détente 11 et le silencieux 12 de l'art antérieur ont été remplacés ici par deux tronçons 13a et 13b munis d'un matériau absorbant sur leur paroi intérieure, situés de part et d'autre d'un dispositif de restriction variable constitué par un volet de type vanne-papillon 14 qui est manoeuvré par un actionneur 15, lui-même commandé par un dispositif électronique 16, lequel analyse les données issues de deux capteurs 17a et 17b placés respectivement sur le moteur 9 et sur la tubulure 8, en aval du volet 14.

Le premier tronçon muni d'un matériau absorbant 13a consiste en une conduite de 0,8 m de long, garnie intérieurement d'une laine de roche de 20 mm d'épaisseur qui est maintenue en place par un grillage ou une tôle perforée de forme cylindrique de 45 mm de diamètre.

Le second tronçon muni d'un matériau absorbant 13b, est de structure identique mais présente une longueur de 0,6 m.

Les deux lignes d'échappement des figures 2 et 3 ont fait l'objet de tests comparatifs dont les résultats apparaissent sur les figures 4 à 6.

Les niveaux sonores du bruit des lignes d'échappement ont été mesurés identiquement pour chaque ligne, en plaçant un microphone préalablement étalonné à 10 cm du plan de la bouche de sortie de chaque ligne d'échappement et à 45° de l'axe de cette dernière.

Les niveaux sonores mesurés dans une bande de 20 à 20 000 hertz, pour des régimes du moteur 9 variant de 1200 à 3800 tours par minute, ont donné les deux courbes de la figure 4, la courbe supérieure 18 correspondant à la ligne d'échappement de la figure 2 et la courbe inférieure 19 correspondant à la ligne d'échappement de la figure 3.

On voit clairement sur cette figure 4 que la ligne d'échappement de l'art antérieur est sensiblement plus bruyante, quel que soit le régime du moteur 9, que la ligne d'échappement selon l'invention.

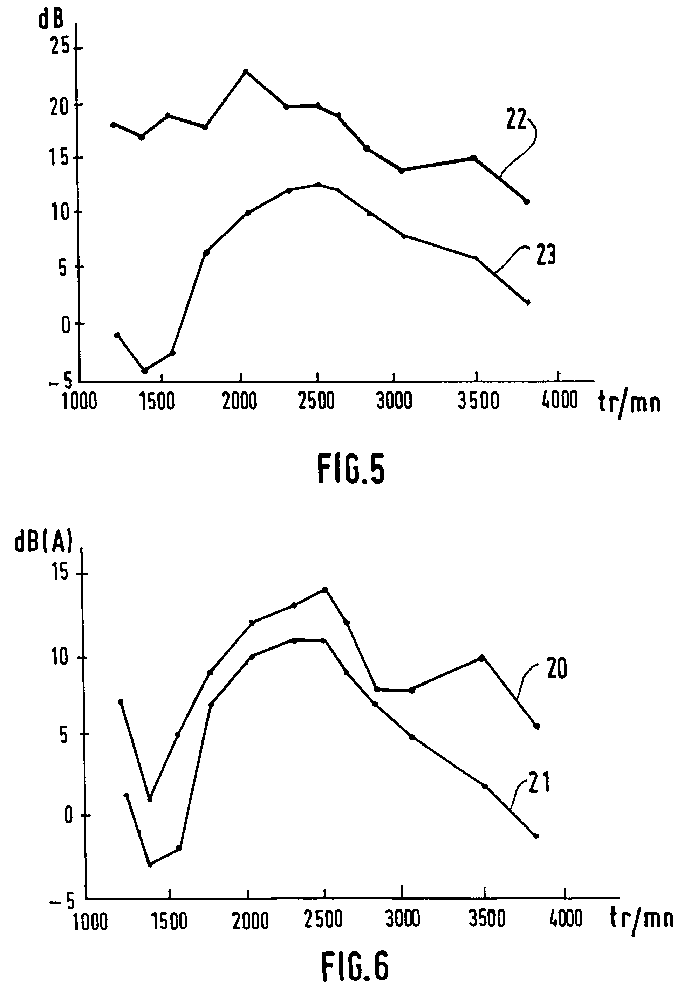

De même, on a comparé les performances des deux lignes des figures 2 et 3, par la technique dite de mesure de la perte par insertion : pour chaque ligne d'échappement, on a mesuré successivement les bruits émis par la ligne d'échappement munie de l'élément dont on veut mesurer l'efficacité, puis les bruits émis par la dite ligne d'échappement dont l'élément en question a été remplacé par un tronçon de tubulure de même longueur. On a ensuite reporté sur les graphes des figures 5 et 6 les différences entre les niveaux sonores mesurés sans l'élément de réduction de bruit et ceux mesurés avec ledit élément.

Les courbes 20 et 22 correspondent à la ligne d'échappement de la figure 3 tandis que les courbes 21 et 23 correspondent à la ligne d'échappement de la figure 2.

La figure 5 représente la mesure brute exprimée en décibels. On voit sur cette figure que l'efficacité de la ligne d'échappement selon l'invention est bien supérieure à celle de la ligne d'échappement de l'art antérieur.

Pour tenir compte de la sensibilité de l'oreille humaine, on a corrigé les mesures brutes de la figure 5 par une technique connue de pondération qui aboutit aux courbes représentées à la figure 6 sur laquelle l'unité de niveau sonore est le décibel A (dB(A)).

Sur cette figure 6, il apparait que la différence d'efficacité entre la ligne d'échappement selon l'invention et celle de l'art antérieur est importante à tous les régimes de fonctionnement du moteur 9.

La figure 7 représente un relevé de pression effectué dans la ligne d'échappement de la figure 3, grâce au capteur 17b situé immédiatement en aval du volet 14.

Ce relevé de pression correspond au fonctionnement d'un moteur à 6 cylindres en ligne, au régime de 1300 tours par minute.

Chaque crête de la courbe correspond à l'ouverture des soupapes d'échappement d'un cylindre.

La courbe de la figure 7 comporte deux cycles, chaque crète étant numérotée par un chiffre de 1 à 6 correspondant au numéro de cylindre concerné.

Dans le cas présent, on peut déduire de ce relevé de pression que le cylindre 3 comporte une soupape d'échappement très défectueuse, puisqu'il n'y a pas de chute de pression entre les crêtes 2 et 3, ce qui correspond à une fuite d'échappement au moment de la montée en pression du cylindre 3.

On peut également remarquer que le cylindre 6 présente un défaut de combustion puisque la pression des gaz d'échappement issue de ce cylindre est notablement inférieure à celle des cylindres 1 à 5.

Bien qu'une telle méthode de contrôle du bon fonctionnement d'un moteur thermique soit connue, la ligne d'échappement selon l'invention permet de mettre en oeuvre cette méthode en temps réel, en cours d'utilisation du moteur.

Il est bien entendu que le mode de réalisation qui vient d'être décrit ne présente aucun caractère limitatif.

Dans une variante, on pourrait en particulier prévoir une double paroi pour réduire encore sensiblement la capacité émissive de la tubulure.

Outre qu'elle s'applique à toute tubulure d'entrée ou de sortie d'une machine alternative, la ligne d'admission ou d'échappement selon l'invention peut être intercalée dans une conduite de gaz ou dans une conduite de liquide ou d'un mélange de ces deux phases où elle permet d'atténuer les bruits et les fluctuations de pression et de débit générés par toute onde de pression plus ou moins accidentelle ou périodique s'y propageant.

## Revendications

1. Ligne d'admission ou d'échappement notamment pour machine alternative, constituée par une tubulure (1) de circulation de gaz, ladite tubulure étant munie d'au moins un capteur (6) de mesure d'une grandeur physique caractéristique du débit instantané des gaz, la ligne d'échappement comportant en outre au moins un dispositif de restriction variable (3) de sa section de passage des gaz, qui fait varier instantanément la perte d'énergie des gaz circulant dans la tubulure (1) en fonction de la grandeur mesurée par le capteur (6), caractérisée par le fait que la paroi intérieure (1a) de la tubulure (1) est garnie d'un matériau (2) absorbant l'énergie acoustique, et par le fait que la ligne comporte un dispositif électronique pour analyser le signal issu du capteur de mesure (6) en vue de détecter et éventuellement de diagnostiquer un dysfonctionnement de la machine alternative (9).

2. Ligne d'admission ou d'échappement selon la revendication 1, caractérisée par le fait que le dispositif de restriction (3) de la section de la tubulure (1) agit en partie de la tubulure (1) éloignée de la machine alternative (9).

3. Ligne d'admission ou d'échappement selon la revendication 1, caractérisée par le fait que la partie de la tubulure (2) située en amont du dispositif de restriction (3) possède un diamètre plus important que celui de la partie de la tubulure qui renferme ce dernier.

4. Ligne d'admission ou d'échappement selon l'une quelconque des revendications précédentes, caractérisée par le fait qu'elle comporte un moyen de réglage du dispositif de restriction qui provoque l'atténuation d'une gamme préférentielle de fréquences de pulsation des gaz permettant l'obtention d'une sonorité particulière de la ligne d'admission ou d'échappement.

5. Ligne d'échappement selon l'une quelconque des revendications précédentes, caractérisée par le fait qu'elle équipe un véhicule automobile et que le dispositif de restriction intègre la vitesse de déplacement du véhicule comme paramètre supplémentaire pour atténuer au maximum les bruits d'échappement du moteur lorsque le véhicule se déplace à vitesse réduite et pour minimiser les pertes de charge des gaz d'échappement de manière à améliorer les performances du moteur thermique, lorsque le véhicule se déplace à vitesse élevée.

## Patentansprüche

1. Ein- oder Auslaßleitung, insbesondere für einen Hubkolbenmotor, bestehend aus einem Gasströmstutzen (1), der mindestens mit einem Detektor (6) zur Messung einer für den momentanen Gasdurchsatz charakteristischen physikalischen Größe versehen ist, wobei die Auslaßleitung ferner mindestens eine Einrichtung (3) zur änderbaren Verengung ihres Gasströmungsquerschnitts aufweist, die die momentane Energieabnahme des durch den Stutzen (1) strömenden Gases als Funktion der von dem Detektor (6) gemessenen Größe ändert, dadurch gekennzeichnet, daß die Innenwand (1a) des Stutzens (1) mit einem schallabsorbierenden Material (2) ausgekleidet ist, und daß die Leitung eine elektronische Einrichtung zum Analysieren des von dem Detektor (6) abgegebenen Signals im Hinblick auf die Erfassung und gegebenenfalls die Diagnose einer Fehlfunktion des Hubkolbenmotors (9) aufweist.

2. Ein- oder Auslaßleitung nach Anspruch 1, dadurch gekennzeichnet, daß die Einrichtung (3) zur Querschnittsverengung des Stutzens (1) auf einen von dem Hubkolbenmotor (9) entfernten Teil des Stutzens (1) einwirkt.

3. Ein- oder Auslaßleitung nach Anspruch 1, dadurch gekennzeichnet, daß der stromaufwärts von der Verengungseinrichtung (3) gelegene Teil des Stutzens (2) einen größeren Durchmesser hat als der die Einrichtung enthaltende Teil des Stutzens.

4. Ein- oder Auslaßleitung nach einem der vorhergehenden Ansprüche, dadurch gekennzeichnet, daß sie eine Vorrichtung zur Steuerung der Verengungseinrichtung aufweist, die eine Dämpfung eines bevorzugten Frequenzbereichs von Gasschwingungen hervorruft und dadurch bewirkt, daß die Ein- bzw. Auslaßleitung einen bestimmten Klang erhält.

5. Auslaßleitung nach einem der vorhergehenden Ansprüche, dadurch gekennzeichnet, daß sie Teil eines Kraftfahrzeugs ist und daß die Verengungseinrichtung die Bewegungsgeschwindigkeit des Fahrzeugs als zusätzlichen Parameter berücksichtigt, um bei niedriger Fahrzeuggeschwindigkeit die Auspuffgeräusche des Motors maximal zu dämpfen und bei hoher Fahrzeuggeschwindigkeit die Druckverluste des Abgases zur Verbesserung des thermischen Wirkungsgrades des Motors zu minimieren.

## Claims

1. Inlet or exhaust line, especially for a reciprocating machine, constituted by a gas flow pipe (1), the said pipe being fitted with at least one sensor (6) for measuring a physical quantity characteristic of the instantaneous flow rate of the gases, the exhaust line furthermore including at least one device (3) for variably restricting its cross-section for passage of the gases, which instantaneously varies the energy loss of the gases flowing in the pipe (1) as a function of the quantity measured by the sensor (6), characterized in that the internal wall (1a) of the pipe (1) is lined with a material (2) absorbing the acoustic energy and in that the line includes an electronic device for analysing the signal output by the measurement sensor (6) with a view to detecting and possibly diagnosing a malfunction of the reciprocating machine (9).

2. Inlet or exhaust line according to Claim 1, characterized in that the device (3) for restricting the cross-section of the pipe (1) acts on that part of the pipe (1) remote from the reciprocating machine (9).

3. Inlet or exhaust line according to Claim 1, characterized in that that part of the pipe (2) located upstream of the restriction device (3) possesses a diameter greater than that of that part of the pipe which contains the latter.

4. Inlet or exhaust line according to any one of the preceding claims, characterized in that it includes a means for regulating the restriction device which causes attenuation of a preferential range of gas pulsation frequencies enabling a particular sonority of the inlet or exhaust line to be obtained.

5. Exhaust line according to any one of the preceding claims, characterized in that it equips a motor vehicle and in that the restriction device incorporates the speed of movement of the vehicle as an additional parameter in order to attenuate as much as possible the exhaust noise of the engine when the vehicle is moving at low speed and in order to minimize the pressure drops of the exhaust gases so as to improve the performance of the combustion engine when the vehicle is moving at high speed.
